(19) Europäisches Patentamt
European Patent Office
Office européen des brevets

(11) **EP 3 126 788 B1**

(12) **EUROPÄISCHE PATENTSCHRIFT**

(45) Veröffentlichungstag und Bekanntmachung des Hinweises auf die Patenterteilung:
**03.06.2020   Patentblatt 2020/23**

(21) Anmeldenummer: **15712938.8**

(22) Anmeldetag: **31.03.2015**

(51) Int Cl.:
*G01F 1/64* *(2006.01)*      *G01F 1/684* *(2006.01)*
*G01F 1/704* *(2006.01)*      *D06F 39/08* *(2006.01)*
*G01F 1/708* *(2006.01)*

(86) Internationale Anmeldenummer:
**PCT/EP2015/056999**

(87) Internationale Veröffentlichungsnummer:
**WO 2015/150371 (08.10.2015 Gazette 2015/40)**

(54) **HAUSHALTSGERÄT MIT EINEM VOLUMENSTROMSENSOR**

DOMESTIC APPLIANCE WITH A VOLUMETRIC FLOW SENSOR

APPAREIL MÉNAGER AVEC UN CAPTEUR DE DÉBIT VOLUMIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.04.2014   DE 102014206389**

(43) Veröffentlichungstag der Anmeldung:
**08.02.2017   Patentblatt 2017/06**

(73) Patentinhaber: **BSH Hausgeräte GmbH**
**81739 München (DE)**

(72) Erfinder: **EGLMEIER, Hans**
**10587 Berlin (DE)**

(56) Entgegenhaltungen:
**EP-A1- 1 521 064          EP-A2- 1 690 971**
**DE-A1- 10 049 781        DE-A1- 10 063 998**
**DE-A1-102004 048 746   DE-A1-102011 122 921**
**US-A1- 2002 092 363      US-B2- 7 078 909**

EP 3 126 788 B1

**Beschreibung**

Die vorliegende Erfindung betrifft ein Haushaltsgerät mit einem Volumenstromsensor für Fluide.

In einen Fluidstrom eingebrachte Bauteile, wie beispielsweise Heiz- und Messdrähte, stören zum einen den Fluidstrom und fangen außerdem wie ein Sieb Fremdkörper auf, wie beispielsweise Klumpen, Flusen oder Verunreinigungen. Die Verunreinigungen kumulieren sich an den Bauteilen, so dass sich der Volumenstromsensor im Lauf des Betriebs zusetzen kann.

Die Druckschrift DE 198 58 388 A1 beschreibt beispielsweise einen thermischen Laufzeitsensor.

Die Offenlegungsschrift DE 100 63 998 A1 zeigt eine nicht invasive Fluidflusserfassung basierend auf indizierten Wärmemarkierungen und indirekter Temperaturüberwachung.

Die Patentschrift US 3,019,647 zeigt eine Vorrichtung zum Messen einer Flussrate basierend auf einer Ultraschallmessung.

Die Patentschrift DE 124 676 A1 zeigt eine Vorrichtung zur Durchflussmessung von Flüssigkeiten.

Die Patentschrift US 5,526,696 zeigt eine Temperaturmessung in einem Fluid.

Die Patentschrift US 4,604,904 zeigt einen Sensor für eine Detektion von Signalen.

Die Offenlegungsschrift US 2002/092363 A1 zeigt eine Flussmessvorrichtung.

Die Offenlegungsschrift EP 1 690 971 A2 zeigt eine Heizeinrichtung für ein Elektrogerät.

Die Offenlegungsschrift DE 10 2011 122 921 A1 offenbart eine Vorrichtung und ein Verfahren zum schaltbaren Verbinden.

Es ist die der Erfindung zugrundeliegende Aufgabe, ein Haushaltsgerät anzugeben, bei dem die Bewegung eines Fluids mit hoher Präzision bei geringem Aufwand erfasst werden kann.

Diese Aufgabe wird durch den Gegenstand mit den Merkmalen nach den unabhängigen Ansprüchen 1 und 11 gelöst. Vorteilhafte Ausführungsformen der Erfindung sind Gegenstand der abhängigen Ansprüche.

Gemäß einem ersten Aspekt der Erfindung wird die Aufgabe durch ein Haushaltsgerät mit einer Rohrleitung gelöst, die einen Volumenstromsensor für Fluide umfasst, bei dem der Volumenstromsensor ein erstes Elektrodenpaar in einer Wand der Rohrleitung zum Erwärmen des Fluids und ein zweites Elektrodenpaar in der Wand der Rohrleitung zum Bestimmen einer Leitfähigkeit des erwärmten Fluids umfasst. Das Haushaltgerät oder der Volumensensor umfasst eine elektrische Schaltung zum Anlegen eines elektrischen Strompulses an das erste Elektrodenpaar und eine elektrische Schaltung zum Erfassen der Leitfähigkeit des Fluids an dem zweiten Elektrodenpaar. Das Fluid ist vorzugsweise ein elektrolytisches Fluid. Durch Ausnutzen von Verschiebungsströmen lassen sich auch nichtelektrolytische Fluide als ideale Isolatoren messen. Tatsächlich weisen praktisch alle Fluide, die in Haushaltsgeräten auftreten, eine ausreichende Leitfähigkeit auf, um als Elektrolyte angesehen zu werden, einschließlich des als destilliert geltenden Kondensats aus Kondensationstrocknern.

Dadurch wird beispielsweise der technische Vorteil erreicht, dass eine nicht-invasive Messung ohne Hindernisse im Fluidstrom durchgeführt werden kann, durch die der Fluidstrom beeinflusst werden würde.

Unter einem Haushaltsgerät wird ein Gerät verstanden, das zur Haushaltsführung eingesetzt wird. Das kann ein Haushaltsgroßgerät sein, wie beispielsweise eine Waschmaschine, ein Wäschetrockner, eine Geschirrspülmaschine, ein Gargerät, eine Dunstabzugshaube oder ein Kältegerät, wie z.B. ein Kühlschrank, ein Gefrierschrank oder eine Kühlgefrierkombination.

Das kann aber auch ein Haushaltskleingerät sein, wie beispielsweise ein Warmwasserbereiter, ein Kaffeevollautomat, eine Küchenmaschine oder ein Staubsauger. Eine Rohrleitung einer Waschmaschine ist insbesondere eine Rohrleitung zum Transport einer Waschmittellauge und/oder von Wasser und/oder von Waschmittel.

Eine Rohrleitung eines Kältegeräts ist insbesondere eine Kältemittelleitung. Das Fluid ist hier zum Beispiel ein Kältemittelfluid.

Eine Rohrleitung eines Kaffeevollautomaten oder eines Warmwasserbereiters ist insbesondere eine Rohrleitung zum Transport von Wasser und/oder Kaffee.

Eine Rohrleitung im Sinne der vorliegenden Erfindung umfasst also insbesondere ein oder mehrere Rohre. Ein Rohr ist insbesondere ein länglicher Hohlkörper, dessen Länge in der Regel größer als sein Durchmesser ist. Die Rohrleitung weist also insbesondere eine in sich geschlossene Mantelfläche auf (zum Beispiel die Mantelfläche des Hohlkörpers, insbesondere des Hohlzylinders). Eine Rohrleitung im Sinne der vorliegenden Erfindung ist also insbesondere verschieden von einem Kanal, der in der Regel zu einer Seite offen ist, also kein Hohlkörper ist.

In einer vorteilhaften Ausführungsform des Haushaltsgerätes liegen sich die Elektroden des ersten Elektrodenpaars und/oder die Elektroden des zweiten Elektrodenpaars an der Rohleitung diametral gegenüber. Dadurch wird beispielsweise der technische Vorteil erreicht, dass eine Heizzone durch den Querschnitt der gesamten Rohrleitung erzeugt werden kann.

In einer weiteren vorteilhaften Ausführungsform des Haushaltsgerätes steht die Verbindungslinie der Elektroden des ersten Elektrodenpaars senkrecht auf der Verbindungslinie der Elektroden des zweiten Elektrodenpaars. Dadurch wird beispielsweise der technische Vorteil erreicht, dass von einer Temperaturerhöhung des Fluids nur der in der Mittenachse der Rohrleitung liegende Anteil erfasst wird.

In einer weiteren vorteilhaften Ausführungsform des Haushaltsgerätes steht die Verbindungslinie der Elektroden des ersten Elektrodenpaars parallel zu der Verbindungslinie der Elektroden des zweiten Elektrodenpaars steht. Dadurch wird beispielsweise der technische Vorteil erreicht, dass sich der messbare Bereich vergrößert.

In einer weiteren vorteilhaften Ausführungsform des Haushaltsgerätes sind die Elektroden des ersten Elektrodenpaars und/oder die Elektroden des zweiten Elektrodenpaars in Umfangsrichtung der Rohrleitung linienförmig. Dadurch wird beispielsweise der technische Vorteil erreicht, dass sich die Breite eines Messpulses und einer thermischen Markierung innerhalb des Fluids verringert.

In einer weiteren vorteilhaften Ausführungsform des Haushaltsgerätes umfasst der Volumenstromsensor eine Kette von hintereinander liegenden Elektrodenpaaren. Dadurch wird beispielsweise der technische Vorteil erreicht, dass eine Wärmemodulation in dem Fluid erzeugt wird mit der die Genauigkeit erhöht wird.

In einer weiteren vorteilhaften Ausführungsform des Haushaltsgerätes ist die Rohrleitung im Bereich eines Elektrodenpaars abgeflacht. Dadurch wird beispielsweise der technische Vorteil erreicht, dass eine höhere Stromdichte durch das Elektrodenpaar eingebracht werden kann.

In einer weiteren vorteilhaften Ausführungsform des Haushaltsgerätes, welche nicht Teil der Erfindung ist, ist der Querschnitt der Rohrleitung kreuzförmig. Dadurch wird beispielsweise der technische Vorteil erreicht, dass eine Dichte des Temperaturfelds noch erhöht wird.

In einer weiteren vorteilhaften Ausführungsform des Haushaltsgerätes, welche nicht Teil der Erfindung ist, ist der Querschnitt der Rohrleitung malteserkreuzförmig. Dadurch wird beispielsweise der technische Vorteil erreicht, dass eine Dichte des Temperaturfelds noch weiter erhöht wird.

In einer weiteren vorteilhaften Ausführungsform des Haushaltsgerätes, welche nicht Teil der Erfindung ist, sind die Elektroden des ersten Elektrodenpaars und/oder die Elektroden des zweiten Elektrodenpaars an einer Außenseite der Rohrleitung angeordnet. Dadurch wird beispielsweise der technische Vorteil erreicht, dass die Elektroden nicht in Kontakt mit dem Fluid treten.

In einer weiteren vorteilhaften Ausführungsform des Haushaltsgerätes, welche nicht Teil der Erfindung ist, umfassen die Elektroden des ersten Elektrodenpaars und/oder die Elektroden des zweiten Elektrodenpaars einen Korrosionsschutz. Dadurch wird beispielsweise der technische Vorteil erreicht, dass die Langlebigkeit des Volumensensors vergrößert wird.

In einer weiteren vorteilhaften Ausführungsform des Haushaltsgerätes umfassen die Elektroden des ersten Elektrodenpaars und/oder die Elektroden des zweiten Elektrodenpaars eine kreisförmige Kontaktfläche. Dadurch wird beispielsweise der technische Vorteil erreicht, dass die Elektroden eine zylinderförmige Heizzone oder Messzone erzeugen.

In einer weiteren vorteilhaften Ausführungsform des Haushaltsgerätes, welche nicht Teil der Erfindung ist, umfasst der Volumenstromsensor eine

Wechselspannungserzeugungseinrichtung zum Erzeugen einer Wechselspannung für die Elektrodenpaare. Dadurch wird beispielsweise der technische Vorteil erreicht, dass eine thermische Messung durchgeführt werden kann, bei der das Ein- und Auskoppeln der Messsignale kapazitiv erfolgt, d.h. durch eine isolierende Wand hindurch ohne direkten Kontakt zwischen Elektrode und Fluid.

In einer weiteren vorteilhaften Ausführungsform des Haushaltsgerätes ist der Volumenstromsensor symmetrisch aufgebaut. Dadurch wird beispielsweise der technische Vorteil erreicht, dass der Volumenstromsensor in beiden unterschiedlichen Einbaulagen verwendet werden kann.

In einer weiteren vorteilhaften Ausführungsform des Haushaltsgerätes umfasst der Volumenstromsensor eine Wheatstone-Brücke oder eine Thomson-Brücke zum Erfassen einer Widerstands- oder Leitfähigkeitsänderung, die mit dem zweiten Elektrodenpaar verbunden ist. Dadurch wird beispielsweise der technische Vorteil erreicht, dass eine Widerstandsänderung durch das Fluid auf einfache Weise erfasst werden kann.

Beispielhaft beträgt eine jeweilige Fläche des ersten und des zweiten Elektrodenpaars zwischen 0,5 cm$^2$ und 3 cm$^2$, vorzugsweise zwischen 1 cm$^2$ und 2 cm$^2$, insbesondere 1 cm$^2$. Dadurch wird zum Beispiel der technische Vorteil erreicht, dass zum Beispiel das Fluid effizient kapazitiv mittels eines Wechselstroms erwärmt und/oder die Leitfähigkeit des Fluids kapazitiv mittels eines Wechselstroms erfasst werden kann.

Beispielhaft ist ein Durchmesser der Rohrleitung größer als 1 mm, insbesondere größer als 2 mm, vorzugsweise größer als 5 mm, insbesondere größer als 10 mm, insbesondere größer als 15 mm, vorzugsweise größer als 20 mm, vorzugsweise größer als 50 mm. Insbesondere beträgt ein Durchmesser der Rohrleitung zwischen 1 mm und 100 mm, insbesondere zwischen 10 mm und 50 mm. Der Durchmesser der Rohrleitung liegt zum Beispiel in einem Größenbereich, der Größenwerte umfasst, die größer als Größenwerte sind, die im Mikrometerbereich liegen.

Durch das Vorsehen der vorstehend genannten beispielhaften Werte für den Durchmesser der Rohrleitung wird insbesondere der technische Vorteil bewirkt, dass ein Risiko eines Verstopfens der Rohrleitung aufgrund einer Verunreinigung effizient verringert oder vermieden werden kann.

Beispielhaft ist eine Größe des ersten und/oder des zweiten Elektrodenpaars größer als 1 mm, insbesondere größer als 2 mm, insbesondere größer als 5 mm, vorzugsweise größer als 10 mm. Dadurch wird insbesondere der technische Vorteil bewirkt, dass ein elektrischer Strom durch die Elektroden aufgrund der Größe der Elektroden mit einem entsprechend verringerten Widerstand fließen kann.

Beispielhaft ist die Rohrleitung aus einem Kunststoff gebildet oder umfasst einen Kunststoff. Dadurch wird insbesondere der technische Vorteil bewirkt, dass die Rohrleitung effizient hergestellt werden kann.

Beispielhaft ist die Rohrleitung aus einem Metall gebildet oder umfasst ein Metall. Die Formulierung "Metall" umfasst insbesondere eine "Metalllegierung". Dadurch wird insbesondere der technische Vorteil bewirkt, dass die Rohrleitung effizient hergestellt werden kann.

Beispielhaft ist eine Länge der Rohrleitung größer als 0,5 cm, vorzugsweise größer als 1 cm, insbesondere größer als 5 cm, vorzugsweise größer als 10 cm, insbesondere größer als 50 cm.

Beispielhaft ist die Rohrleitung für einen Volumenstrom von größer als 1 ml/min., insbesondere von größer als 5 ml/min., insbesondere von größer als 10 ml/min., ausgelegt oder eingerichtet oder ausgebildet. Dadurch wird insbesondere der technische Vorteil bewirkt, dass ein entsprechendes Fluidvolumen pro Zeiteinheit durch die Rohrleitung fließen kann. Das heißt also insbesondere, dass ein Volumenstrom des Fluids größer sein kann als einen der vorstehend genannten Volumenstromwerte. Das heißt also insbesondere, dass der Volumenstromsensor ein Volumenstromsensor für Fluide ist, die einen Volumenstrom von größer als einen der vorstehend genannten Volumenstromwerte aufweisen.

Beispielhaft ist die Rohrleitung flexibel. Dadurch wird insbesondere der technische Vorteil bewirkt, dass eine Montage der Rohrleitung effizient durchgeführt werden kann.

Gemäß einem zweiten Aspekt der Erfindung wird die Aufgabe durch ein Verfahren zum Bestimmen eines Volumenstroms eines Fluids in einer Rohrleitung des Haushaltsgeräts, gelöst, mit den Schritten eines Erwärmens des Fluids mittels eines ersten Elektrodenpaars in einer Wand der Rohrleitung; eines Erfassens der Leitfähigkeit des erwärmten Fluids mittels eines zweiten Elektrodenpaars in der Wand der Rohrleitung, und eines Erfassens eines Volumenstroms des Fluids auf Basis einer Zeit zwischen dem Erwärmen des Fluids und dem Erfassen einer erhöhten Leitfähigkeit. Dadurch werden die gleichen technischen Vorteile wie durch das Haushaltgerät nach dem ersten Aspekt erreicht.

In einer vorteilhaften Ausführungsform des Verfahrens, welche nicht Teil der Erfindung ist, wird das Fluid kapazitiv mittels eines Wechselstroms erwärmt und/oder die Leitfähigkeit des Fluids kapazitiv mittels eines Wechselstroms erfasst. Dadurch wird beispielsweise ebenfalls der technische Vorteil erreicht, dass eine thermische Messung durchgeführt werden kann, bei der das Ein- und Auskoppeln der Messsignale kapazitiv erfolgt.

Ausführungsformen des Verfahrens ergeben sich analog aus entsprechenden Ausführungsformen des Haushaltsgeräts und umgekehrt.

Ausführungsbeispiele der Erfindung sind in den Zeichnungen dargestellt und werden im Folgenden näher beschrieben.

Es zeigen:

Fig. 1    eine schematische Ansicht eines Haushaltsgerätes;

Fig. 2    eine schematische Ansicht eines Volumenstromsensors;

Fig. 3    ein Diagramm einer Leitfähigkeit;

Fig. 4    eine Querschnittsansicht durch den Volumenstromsensor;

Fig. 5A    eine Querschnittsansicht durch den Volumenstromsensor bei einer Strömung des Fluids;

Fig. 5B    eine Querschnittsansicht durch den Volumenstromsensor bei einer Strömung des Fluids;

Fig. 6    eine Querschnittsansicht durch einen Volumenstromsensor mit quadratischen Querschnitt, welcher nicht Teil der Erfindung ist; und

Fig. 7    eine Querschnittsansicht durch einen Volumenstromsensor mit kreuzförmigem und malteserkreuzförmigem Querschnitt, welcher nicht Teil der Erfindung ist.

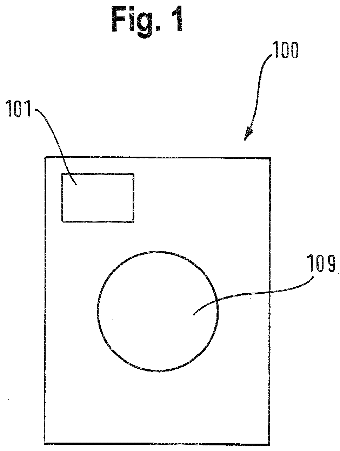

Fig. 1 zeigt eine schematische Ansicht einer Waschmaschine stellvertretend für ein Haushaltsgerät 100. Die Waschmaschine umfasst eine Tür 109 zum Beladen der Waschmaschine mit Wäsche. Zusätzlich umfasst die Waschmaschine einen Vorratsbehälter 101, in den Waschmittel oder andere flüssige Substanzen eingefüllt werden können.

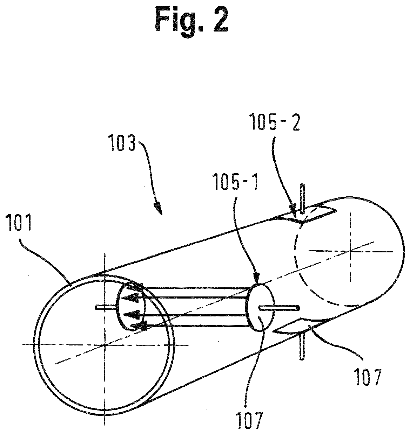

Fig. 2 zeigt eine schematische Ansicht eines Volumenstromsensors 103 zur Laufzeitmessung. Die Laufzeitmessung einer in das fließende Fluid eingebrachten thermischen Markierung lässt eine präzise und von Fluidparametern, wie beispielsweise der Temperatur, Viskosität, Wärmeleitung oder Wärmekapazität, unabhängige Messung der Geschwindigkeit des Fluids zu. Thermische Markierungen lassen sich einfach in das Fluid über Bauteile einbringen und messen.

Der Volumenstromsensor 103 umfasst hingegen ein erstes Elektrodenpaar 105-1 in einer Wand der Rohrleitung 101 zum Erwärmen des Fluids und ein zweites Elektrodenpaar 105-2 in der Wand der Rohrleitung 101 zum Bestimmen einer Leitfähigkeit des erwärmten Fluids. Die Heizung und die Messstrecke werden über die in der Rohrleitung 101 angebrachte Elektrodenpaare 105-1 und 105-2 durch Strompfade im Fluid realisiert.

Ein durch das Fluid fließender elektrischer Strom verursacht Joulesche Wärme, die zu einer lokalen Erwärmung des Fluids in einem Bereich zwischen den Elektroden 107 führt. Mittels zweier Elektroden 107 lässt sich dem Fluid eine thermische Markierung aufprägen. Der Stromfluss durch die Elektroden 107 ist dabei vorzugsweise zeitlich begrenzt, d.h. impulsartig (beispielsweise ein Rechteckimpuls mit einer Dauer von 0.1 s), um einen im fließenden Fluid korrespondierend örtlich begrenzten Wärmepuls zu erhalten. Bei Fließgeschwindigkeiten von 1 cm/s ergibt sich entsprechend eine thermische Markierung mit einer Grundlänge von 1 mm zuzüglich einer Länge des Heizelements und einer Verbreiterung durch Wärmeleitung und Turbulenzen.

Die thermische Markierung wird von der fließenden Flüssigkeit stromabwärts weitergetragen und verbreitert sich entsprechend der Wärmeleitung und der Durchmischung bei turbulenten Strömungen in der Flüssigkeit. Außerdem verformt sich eine zunächst lineare oder ebene thermische Markierung in laminaren Strömungen in die Form einer Parabel oder eines Paraboloids. Stromabwärts befindet sich das Elektrodenpaar 105-2 in der Rohrleitung 101. Zwischen den beiden Elektroden 107 des Elektrodenpaars 105-2 wird der elektrische Widerstand oder die Leitfähigkeit des Fluids gemessen.

In dem Volumenstromsensor 103 wird die Leitfähigkeit des elektrolytischen Fluids anstelle von eingebrachten Feststoffleitern verwendet, wie beispielsweise Drähten. Die meisten Fluide im Haushaltsgerätebereich weisen elektrolytische Eigenschaften auf, da diese in der Regel auf Wasser basieren und häufig zusätzlich mit ionischen Wirkstoffen versetzt sind, wie beispielsweise flüssige Wasch- und Spülmittel. Dadurch ergibt sich eine nichtinvasive Variante der Laufzeitmessung.

Die Verbindungslinie der Elektroden 107 des ersten Elektrodenpaars 105-1 steht senkrecht auf der Verbindungslinie der Elektroden 107 des zweiten Elektrodenpaars 105-2. Dadurch entstehen durch die vier Elektroden 107, die sich jeweils paarweise auf einem Durchmesser der runden Rohrleitung 101 gegenüberstehen, gekreuzte Strompfade. Die Verbindungslinien der einander zugeordneten Elektroden 107 stehen orthogonal aufeinander und weisen in Fließrichtung einen Abstand auf. Da das zweite Elektrodenpaar 105-2 orthogonal zum ersten Elektrodenpaar 105-1 steht, erfasst dieses von Temperaturerhöhung im Wesentlichen nur den in der Mittenachse der Rohrleitung 101 liegenden Anteil. Zu den Rohrwandungen der Rohrleitung 101 gelegene Feldbereiche erhöhter Temperatur haben mit der Entfernung von der Mittenachse zunehmend kleineren Anteil am Messsignal.

Mit einer orthogonalen Anordnung der Elektrodenpaare 105-1 und 105-2 gestaltet sich die Auswertung des Signals einfach und präzise, indem im Wesentlichen nur der Scheitel des sich ausbildenden Paraboloids und der in der Achse des Messrohrs liegende Strömungsfaden gemessen wird. Bei Kenntnis der Art der Strömung, beispielsweise laminar oder turbulent, lässt sich aus der gemessenen Geschwindigkeit der thermischen Markierung auf den Volumenstrom schließen.

Im Allgemeinen kann die Verbindungslinie der Elektroden 107 des ersten Elektrodenpaars 105-1 auch schräg oder geneigt auf der Verbindungslinie der Elektroden 107 des zweiten Elektrodenpaars 105-2 stehen.

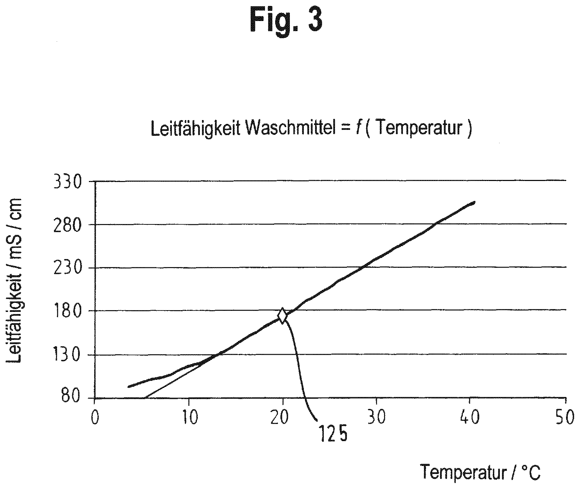

Fig. 3 zeigt ein Diagramm einer Leitfähigkeit. Die elektrische Leitfähigkeit eines ionenhaltigen Fluids, beispielsweise eines Flüssigwaschmittel, ist in der Nähe eines gegebenen Arbeitspunktes 125, beispielsweise bei einer Umgebungstemperatur von 20°C, in guter Näherung linear von der Temperatur abhängig. Die Leitfähigkeitsänderung des Fluids beträgt dabei typisch einige Prozent des aktuellen Werts je Kelvin, so dass durch eine relativ einfache Widerstandsmessung eine Temperaturänderung im Fluid bis zu Bruchteilen eines Kelvin nachgewiesen werden kann. Bei einer drahtgebundenen Messung ist die Änderung um einen Faktor 10 kleiner, d.h. im Bereich %o/K, was einen entsprechend größeren Messaufwand und eine deutlich weniger empfindliche Messung bewirkt.

Bevorzugt erfolgt sowohl die Heizung als auch die Messung mit Wechselströmen geeigneter Frequenz, um galvanische Veränderungen der Elektroden 107 oder des Fluids zu vermeiden. Daneben werden Verfälschungen der Messung durch Polarisationseffekte unterbunden, wie beispielsweise durch Ionenwolken vor den Elektroden 107, die nicht entladen werden können. Typische Frequenzen liegen beispielsweise im Bereich zwischen 20-40 kHz. Der Volumenstromsensor 103 ist ebenfalls geeignet, mit Netzwechselstrom mit einer Frequenz von 50 bzw. 60 Hz betrieben zu werden. Dies erlaubt gegenüber höheren Frequenzen eine deutliche technische Vereinfachung, da keine Umformung durchgeführt werden muss.

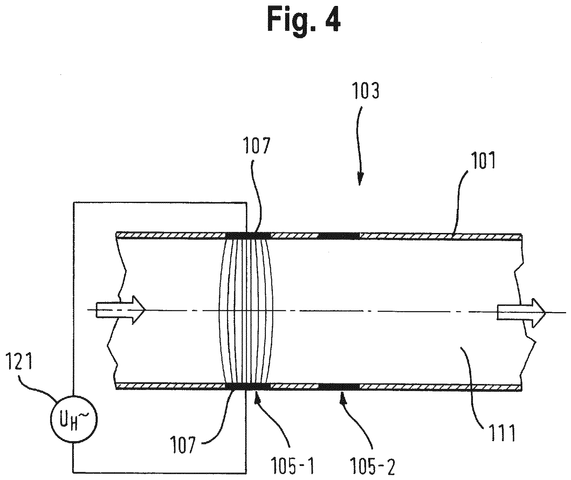

Fig. 4 zeigt eine Querschnittsansicht durch den Volumenstromsensor 103. Von dem stromaufwärts liegenden Elektrodenpaar 105-1 wird ein Wärmeimpuls erzeugt, der sich im Wesentlichen entlang der Verbindungslinie der beiden Elektroden 107 erstreckt. Das Haushaltsgerät 100 umfasst eine elektrische Schaltung 121 zum Anlegen eines elektrischen Strompulses an das erste Elektrodenpaar 105-1, um den Wärmeimpuls zu erzeugen.

Der Querschnitt des Wärmeimpulses resultiert aus der Stromdichteverteilung in dem Fluid 111 und dem zeitlichen Verlauf des Wärme erzeugenden Stromflusses. Bei punktartigen Elektroden 107, entsteht zunächst eine zigarrenförmige Zone erhöhter Temperatur, die sich im weiteren Verlauf zusätzlich parabelartig verformt. Zum Heizen wird zwischen den beiden stromaufwärts liegenden Elektroden 107 ein Wechselspannungspuls angelegt. Die Linien deuten elektrische Stromlinien an. Da die Stromleitung progressiv ist (warmes Fluid leitet besser), bleibt die Stromverteilung kompakt.

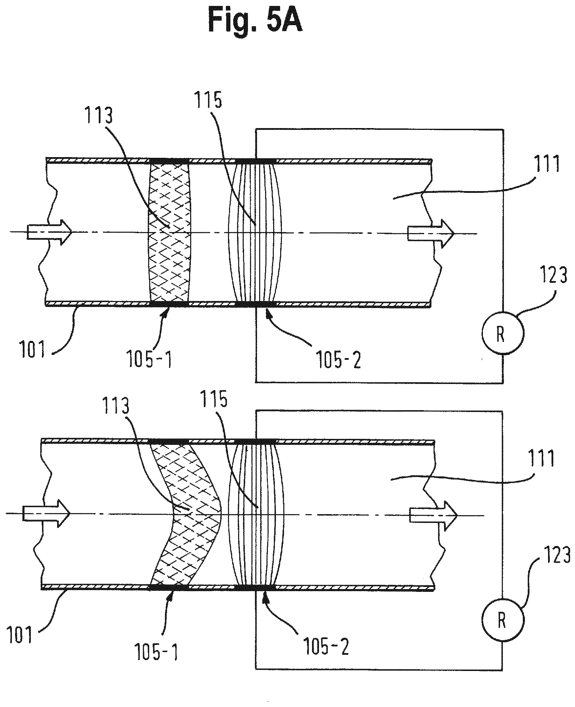

Fig. 5A zeigt eine Querschnittsansicht durch den Volumenstromsensor 103 bei einer Strömung des Fluids 111. Der Volumenstromsensor weist zwei parallel zueinander liegende Elektrodenpaare 105-1 und 105-2 auf. Dadurch entstehen parallele statt gekreuzter Strompfade innerhalb des Fluids 111. Die vier Elektroden 107 sind paarweise auf dem Durchmesser der Rohrleitung 101 in einigem Abstand voneinander angeordnet, so dass die jeweiligen Verbindungslinien parallel liegen. Das Haushaltsgerät 100 umfasst eine elektrische Schaltung 123 zum Erfassen der Leitfähigkeit des Fluids 111 an dem zweiten Elektrodenpaar 105-2.

Die Dauer und der zeitliche Verlauf des gemessenen Impulses folgen im Wesentlichen dem des Pulses, der dem Fluid 111 aufgeprägt ist, zuzüglich einer Verbreiterung, die durch die thermischen und dynamischen Eigenschaften des Fluids 111 und die Form und Größe der Elektroden 107 hervorgerufen wird. Eine Heizzone 113 zwischen beiden Elektroden 107 des Heizelektrodenpaars 105-1 ist durch Fluid 111 gebildet, das gegenüber der Umgebung erwärmt ist und wird mit dem strömenden Fluid weitergetragen. Eine Messzone 115 befindet sich zwischen den beiden Elektroden des zweiten Elektrodenpaars 105-2.

Zwischen dem hier als Messelektrodenpaar fungierenden zweiten Elektrodenpaar 105-2 ergibt sich durch die Messwechselspannung eine durch die Stromlinien angedeutete Wechselstromverteilung. Bei laminarer Strömung verformt sich die zunächst lineare Heizzone 113 in eine Parabel, deren Randzonen im Wesentlichen erhalten bleiben.

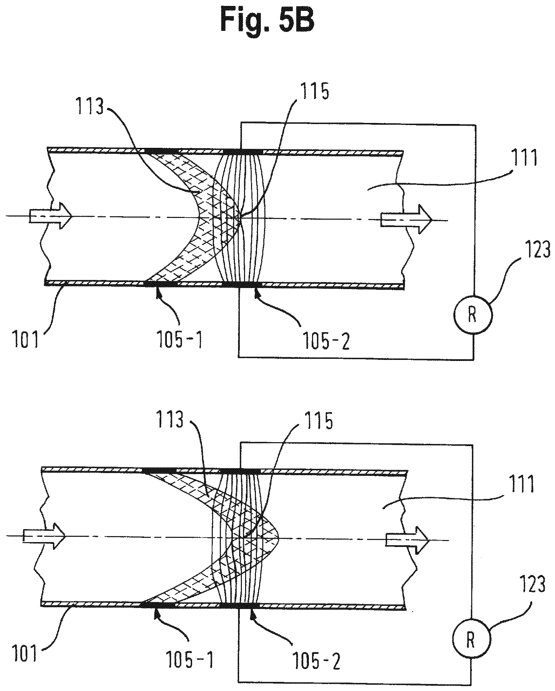

Fig. 5B zeigt eine Querschnittsansicht durch den Volumenstromsensor 103 bei einer weiteren Strömung des Fluids 111. In der erwärmten Heizzone 113 des Fluids 111 ist der Widerstand beispielsweise um etwa 5% gegenüber der Umgebung verringert. Eine Durchdringung der beiden Bereiche von Heizzone 113 und Messzone 115 äußert sich in einem Abnehmen des gemessenen Widerstands an dem zweiten Elektrodenpaar 105-2. Die Änderung des Widerstands geht nach Erreichen eines Maximums asymptotisch gegen Null, während der Widerstand selber ein Minimum durchläuft. Die Änderung geht gegen Null. Der Widerstand geht asymptotisch gegen seinen ursprünglichen Wert.

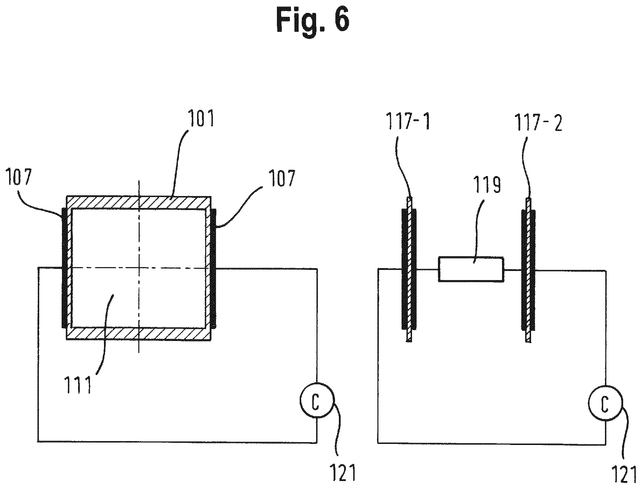

Fig. 6 zeigt eine Querschnittsansicht durch einen Volumenstromsensor 103 mit quadratischem Querschnitt, welcher nicht Teil der Erfindung ist. Die Elektroden 107 bilden eine leitfähige Belegung außen an der Rohrleitung 101. Die Rohrleitung 101 bildet einen isolierenden Kanal, der von dem Fluid 111 durchströmt wird.. Bei ausreichend hoher Frequenz lassen sich die zum Heizen oder Messen erforderlichen Ströme auch kapazitiv einkoppeln. Die Wechselströme zum Heizen oder Messen werden kapazitiv durch die elektrische Schaltung 121 eingekoppelt.

Außen auf der Rohrleitung 101 angeordnete Kondensatorbelegungen bilden daher mit dem Fluid 111 im Rohrinneren eine Serienschaltung aus zwei Kondensatoren 117-1 und 117-2 und dem durch das Fluid 111 gebildeten Widerstand 119.

Eine grobe Abschätzung der Größenordnungen ergibt, dass typische Kondensatorflächen durch die Elektroden 107 etwa effektiv 1 cm$^2$ betragen. Die Dicke der Isolationsschicht im Kondensator beträgt etwa 0.1 mm, $\varepsilon_r$ beträgt beispielsweise 10. In diesem Fall ergibt sich eine Kapazität von

$$C = \varepsilon_0 \varepsilon_r \frac{A}{d} = 8.8 \cdot 10^{-12} \frac{As}{Vm} \cdot 10 \cdot \frac{10^{-4} m^2}{10^{-4} m} = 88 pF.$$

Die Leistung beträgt

$$p = u \cdot i = \frac{u^2}{X_C} = u^2 2\pi f C, \text{ d.h. } f u^2 = \frac{p}{2\pi C} = \frac{0.1 W}{2 \cdot \pi \cdot 88 \cdot 10^{-12} F} = 1.8 \cdot 10^8 \frac{V^2}{s}.$$

Bei einer Frequenz von 1 MHz wäre damit eine Spannung von 13V erforderlich. Die Phasenverschiebung und Widerstand des Fluids 111, insbesondere bei der angegebenen Frequenz, sind in dieser Formel nicht berücksichtigt.

Mit durchaus moderaten Frequenzen und Spannungen lassen sich die zum Heizen und Messen des Fluids verwendeten Ströme durch eine kapazitive Kopplung treiben. Durch die kapazitive Kopplung kommt es zu keinem Kontakt der Elektroden 107 mit dem Fluid 111. Es werden daher diesbezüglich keine hohen Anforderungen an das Elektrodenmaterial und das Messrohrmaterial gestellt. Der Volumenstromsensor 103 kann auf einfache Weise hergestellt werden und eignet sich besonders für aggressive Fluide.

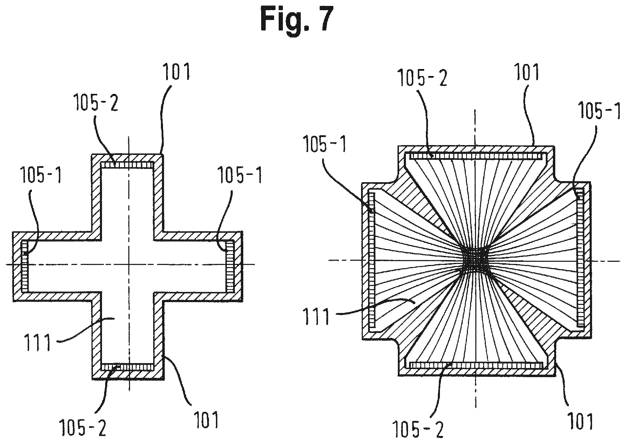

Fig. 7 zeigt eine Querschnittsansicht durch einen Volumenstromsensor 103 mit kreuzförmigem und malteserkreuzförmigem Querschnitt, welcher nicht Teil der Erfindung ist. Ein Messbereich in der Rohrleitung 101 mit zwei orthogonalen Elektrodenpaaren 105-1 und 105-2 kann dann beispielsweise die Form eines Kreuzes haben. Besonders bevorzugt ist die Form eines Malteserkreuzes. Die Elektrodenpaare 105-1 und 105-2 liegen nicht gemeinsam in der Bildebene, sondern sind in Fließrichtung beabstandet. Der Messbereich ist die Überlappung der Strompfade in der Projektion in Fließrichtung. In diesem Fall kommt es zu einer deutlichen Erhöhung der Dichte des Temperaturfelds. Dies ist sowohl bei der Erzeugung der thermischen Markierung als auch bei der Messung von Vorteil.

Die Form des Malteserkreuzes wird bevorzugt mit einer kapazitiven Kopplung kombiniert. Dadurch lassen sich große Koppelflächen mit hohen Kapazitäten und guter Stromeinkopplung unterbringen. Die Messung bleibt wegen der Beschränkung auf die kleine Überlappzone aber noch präzise.

Im Allgemeinen können beliebige Variationen des Querschnitts der Rohrleitung unter Berücksichtigung der Strom- und Wärmeverteilungen vorgesehen sein. Neben den bisher dargestellten Formen lassen sich andere Formen mit anderen Querschnitten realisieren. Insbesondere ist ein abgeflachter Querschnitt im Bereich eines Elektrodenpaars 105-1 und 105-2 vorteilhaft, da sich dadurch eine höhere Stromdichte mit entsprechender Erhöhung der Heizdichte einbringen lässt.

Da nur Widerstands- oder Leitfähigkeitsänderungen zwischen den Elektrodenpaaren 105-1 und 105-2 von Bedeutung sind und die absolute Leitfähigkeit des Fluids 111 eine untergeordnete Rolle spielt, lässt sich eine Wheatstonebrücke oder eine Thomsonbrücke zum Einsatz bringen, in der beispielsweise beide Elektrodenpaare 105-1 und 105-2 in der Brücke verwendet werden.

Im Allgemeinen können in Projektion in Fließrichtung schräg zueinanderstehende Elektrodenpaare 105-1 und 105-2 als Kompromiss aus den beiden vorgenannten Varianten (orthogonal und parallel) verwendet werden. Der messbare Bereich vergrößert sich gegenüber der orthogonalen Anordnung, so dass die Empfindlichkeit des Volumenstromsensors 103 gesteigert wird. Gleichzeitig sinkt aber die Genauigkeit im Rahmen der Näherbarkeit einer Parabel durch ihre im Scheitel angelegte Tangente ein wenig.

Statt flächiger Elektroden 107 kann der Volumenstromsensor 103 linienförmige Elektroden umfassen, die bevorzugt über Teile des Umfangs der Rohrleitung 101 angeordnet sind. Die eingebrachte Heizzone weist damit eine geringe Breite auf, so dass die Schärfe des Messpulses gesteigert wird. Vorteilhaft ist ein symmetrischer Aufbau des Sensors, bei dem keine spezielle Ausprägung von Heiz- und Messelektrodenpaar erfolgt. In diesem Fall ist der Volumenstromsensor 103 richtungsunabhängig betreibbar und kann die Fließrichtung des Fluids 111 detektieren.

Im Allgemeinen können mehr als zwei Elektrodenpaare 105-1 und 105-2 verwendet werden, so dass eine Erhöhung der Genauigkeit erreicht wird. Eine Kette von hintereinander liegenden Elektrodenpaaren 105 erzeugt eine Wärmemodulation in dem Fluid 101. Statt einer einzigen Zeit lassen sich mehrere Zeiten messen, so dass die Genauigkeit erhöht wird und ein Fehler verringert wird.

Für isolierende Flüssigkeiten lassen sich dielektrische Ströme verwenden. Durch passende vor allem auch vom Fluid 111 abhängige Frequenzen lassen sich auch in nichtleitenden Fluiden 111 Ströme treiben. Diese dielektrischen Ströme eignen sich in Kombination mit allen angegebenen Varianten sowohl zum Heizen als auch zum Messen.

Da zum Heizen oder Messen Wechselströme benutzt werden, lassen sich neben der Geschwindigkeit des Fluids 111 auch noch weitere Parameter erfassen. Insbesondere lässt sich durch Variieren der Frequenz die komplexe Leitfähigkeit des Fluids 111 und die damit zusammenhängenden Fluideigenschaften messen, wie beispielsweise Ionenhaltigkeit, Ionenbeweglichkeit, Dielektrizität oder Viskosität.

Der Volumenstromsensor 103 weist gegenüber anderen Laufzeitmessungen mit thermischer Markierung den Vorteil auf, dass eine nicht-invasive Messung durchgeführt wird, d.h. keine Hindernisse im Strom des Fluids 111 stehen. Die Laufzeitmessung ermöglicht eine hohe Präzision bei geringem Aufwand. Laufzeiten im Bereich von Sekunden lassen sich auf einfache Weise messen. Dies kann beispielsweise ein Prozessor zusätzlich erledigen, der für die Steuerung des Haushalsgerätes verwendet wird. Der Temperaturkoeffizient liegt bei leitfähigen Fluiden um den Faktor 10 über metallischen Leitern oder Halbleitern. Bei gegebener Nachweisgrenze lassen sich andere Parameter optimieren, wie beispielsweise eine Erhöhung der Präzision der Messung durch Verkleinerung der Elektrodenfläche. Bei einer kapazitiven Kopplung ist der Volumenstromsensor für Flüssigkeiten aller Art geeignet.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

**BEZUGSZEICHENLISTE**

| 100 | Haushaltsgerät |
| 101 | Rohrleitung |

| 103 | Volumenstromsensor |
|---|---|
| 105-1 | Elektrodenpaar |
| 105-2 | Elektrodenpaar |
| 107 | Elektroden |
| 109 | Tür |
| 111 | Fluid |
| 113 | Heizzone |
| 115 | Messzone |
| 117-1 | Kondensator |
| 117-2 | Kondensator |
| 119 | Widerstand |
| 121 | Elektrische Schaltung |
| 123 | Elektrische Schaltung |
| 125 | Arbeitspunkt |

**Patentansprüche**

1. Haushaltsgerät (100) mit einer Rohrleitung (101), die einen Volumenstromsensor (103) für Fluide umfasst, **dadurch gekennzeichnet, dass** der Volumenstromsensor (103) ein erstes Elektrodenpaar (105-1) in einer Wand der Rohrleitung (101) zum Erwärmen des Fluids und ein zweites Elektrodenpaar (105-2) in der Wand der Rohrleitung (101) zum Bestimmen einer Leitfähigkeit des erwärmten Fluids umfasst, so dass eine nicht-invasive Messung des Volumenstroms ohne Hindernisse im Fluidstrom durchgeführt werden kann, durch die der Fluidstrom beeinflusst werden würde.

2. Haushaltsgerät (100) nach Anspruch 1, **dadurch gekennzeichnet, dass** sich die Elektroden (107) des ersten Elektrodenpaars (105-1) und/oder die Elektroden (107) des zweiten Elektrodenpaars (105-2) an der Rohrleitung (101) diametral gegenüber liegen.

3. Haushaltsgerät (100) nach einem der vorangehenden Ansprüche, **dadurch gekennzeichnet, dass** die Verbindungslinie der Elektroden (107) des ersten Elektrodenpaars (105-1) senkrecht auf der Verbindungslinie der Elektroden (107) des
zweiten Elektrodenpaars (105-2) steht.

4. Haushaltsgerät (100) nach einem der vorangehenden Ansprüche, **dadurch gekennzeichnet, dass** die Verbindungslinie der Elektroden (107) des ersten Elektrodenpaars (105-1) parallel zu der Verbindungslinie der Elektroden (107) des zweiten Elektrodenpaars (105-1) steht.

5. Haushaltsgerät (100) nach einem der vorangehenden Ansprüche, **dadurch gekennzeichnet, dass** die Elektroden (107) des ersten Elektrodenpaars (105-1) und/oder die Elektroden (107) des zweiten Elektrodenpaars (105-2) in Umfangsrichtung der Rohrleitung (101) linienförmig sind.

6. Haushaltsgerät (100) nach einem der vorangehenden Ansprüche, **dadurch gekennzeichnet, dass** der Volumenstromsensor (103) eine Kette von hintereinander liegenden Elektrodenpaaren (105-1; 105-2) umfasst.

7. Haushaltsgerät (100) nach einem der vorangehenden Ansprüche, **dadurch gekennzeichnet, dass** die Rohrleitung (101) im Bereich eines Elektrodenpaars (105-1, 105-2) abgeflacht ist.

8. Haushaltsgerät (100) nach einem der vorangehenden Ansprüche, **dadurch gekennzeichnet, dass** die Elektroden (107) des ersten Elektrodenpaars (105-1) und/oder die Elektroden (107) des zweiten Elektrodenpaars (105-2) eine kreisförmige Kontaktfläche umfassen.

9. Haushaltsgerät (100) nach einem der vorangehenden Ansprüche, **dadurch gekennzeichnet, dass** der Volumenstromsensor (103) symmetrisch aufgebaut ist.

10. Haushaltsgerät (100) nach einem der vorangehenden Ansprüche, **dadurch gekennzeichnet, dass** der Volumenstromsensor (103) eine Wheatstone-Brücke oder eine Thomson-Brücke zum Erfassen einer Widerstands- oder Leitfähigkeitsänderung umfasst, die mit dem zweiten Elektrodenpaar (105-2) verbunden ist.

**11.** Verfahren zum Bestimmen eines Volumenstroms eines Fluids in einer Rohrleitung (101) eines Haushaltsgeräts (100) nach einem der vorangehenden Ansprüche mit den Schritten:

Erwärmen des Fluids mittels des ersten Elektrodenpaars (105-1) in einer Wand der Rohrleitung (101);
Erfassen der Leitfähigkeit des erwärmten Fluids mittels des zweiten Elektrodenpaars (105-2) in der Wand der Rohrleitung (101), und
Erfassen eines Volumenstroms des Fluids auf Basis einer Zeit zwischen dem Erwärmen des Fluids und dem Erfassen einer erhöhten Leitfähigkeit.

**Claims**

**1.** Household appliance (100) with a pipeline (101), which comprises a volumetric flow sensor (103) for fluids, **characterised in that** the volumetric flow sensor (103) comprises a first electrode pair (105-1) in a wall of the pipeline (101) for heating the fluid and a second electrode pair (105-2) in the wall of the pipeline (101) for determining a conductivity of the heated fluid, so that a non-invasive measurement of the volumetric flow can be performed without obstacles in the fluid flow, which obstacles would influence the fluid flow.

**2.** Household appliance (100) according to claim 1, **characterised in that** the electrodes (107) of the first electrode pair (105-1) and/or the electrodes (107) of the second electrode pair (105-2) lie diametrically opposed on the pipeline (101).

**3.** Household appliance (100) according to one of the preceding claims, **characterised in that** the connecting line of the electrodes (107) of the first electrode pair (105-1) stands perpendicularly on the connecting line of the electrodes (107) of the second electrode pair (105-2).

**4.** Household appliance (100) according to one of the preceding claims, **characterised in that** the connecting line of the electrodes (107) of the first electrode pair (105-1) stands parallel to the connecting line of the electrodes (107) of the second electrode pair (105-1).

**5.** Household appliance (100) according to one of the preceding claims, **characterised in that** the electrodes (107) of the first electrode pair (105-1) and/or the electrodes (107) of the second electrode pair (105-2) are linear in the peripheral direction of the pipeline (101).

**6.** Household appliance (100) according to one of the preceding claims, **characterised in that** the volumetric flow sensor (103) comprises a chain of successive electrode pairs (105-1; 105-2).

**7.** Household appliance (100) according to one of the preceding claims, **characterised in that** the pipeline (101) is levelled in the region of an electrode pair (105-1, 105-2).

**8.** Household appliance (100) according to one of the preceding claims, **characterised in that** the electrodes (107) of the first electrode pair (105-1) and/or the electrodes (107) of the second electrode pair (105-2) comprise a circular contact area.

**9.** Household appliance (100) according to one of the preceding claims, **characterised in that** the volumetric flow sensor (103) is structured symmetrically.

**10.** Household appliance (100) according to one of the preceding claims, **characterised in that** the volumetric flow sensor (103) comprises a Wheatstone bridge or a Kelvin bridge for capturing a change in resistance or conductivity, which is connected to the second electrode pair (105-2).

**11.** Method for determining a volumetric flow of a fluid in a pipeline (101) of a household appliance (100) according to one of the preceding claims, with the steps:

Heating the fluid by means of the first electrode pair (105-1) in a wall of the pipeline (101);
Capturing the conductivity of the heated fluid by means of the second electrode pair (105-2) in the wall of the pipeline (101), and
Capturing the volumetric flow of the fluid on the basis of a time between the heating of the fluid and the capturing of an increased conductivity.

**Revendications**

1.  Appareil ménager (100) comprenant une conduite (101) munie d'un capteur de débit volumique (103) pour fluides, **caractérisé en ce que** le capteur de débit volumique (103) comprend une première paire d'électrodes (105-1) dans une paroi de la conduite (101) pour chauffer le fluide et une seconde paire d'électrodes (105-2) dans la paroi de la conduite (101) pour déterminer une conductivité du fluide chauffé, de manière à pouvoir exécuter une mesure non invasive du débit volumique sans obstacles dans l'écoulement du fluide par lesquels l'écoulement du fluide serait influencé.

2.  Appareil ménager (100) selon la revendication 1, **caractérisé en ce que** les électrodes (107) de la première paire d'électrodes (105-1) et/ou les électrodes (107) de la seconde paire d'électrodes (105-2) sont situées de façon diamétralement opposée sur la conduite (101).

3.  Appareil ménager (100) selon l'une des revendications précédentes, **caractérisé en ce que** la ligne de jonction des électrodes (107) de la première paire d'électrodes (105-1) est perpendiculaire à la ligne de jonction des électrodes (107) de la seconde paire d'électrodes (105-2).

4.  Appareil ménager (100) selon l'une des revendications précédentes, **caractérisé en ce que** la ligne de jonction des électrodes (107) de la première paire d'électrodes (105-1) est parallèle à la ligne de jonction des électrodes (107) de la seconde paire d'électrodes (105-1).

5.  Appareil ménager (100) selon l'une des revendications précédentes, **caractérisé en ce que** les électrodes (107) de la première paire d'électrodes (105-1) et/ou les électrodes (107) de la seconde paire d'électrodes (105-2) sont linéaires dans la direction circonférentielle de la conduite (101).

6.  Appareil ménager (100) selon l'une des revendications précédentes, **caractérisé en ce que** le capteur de débit volumique (103) comprend une série de paires d'électrodes (105-1 ; 105-2) disposées l'une derrière l'autre.

7.  Appareil ménager (100) selon l'une des revendications précédentes, **caractérisé en ce que** la conduite (101) est aplatie dans la région d'une paire d'électrodes (105-1, 105-2).

8.  Appareil ménager (100) selon l'une des revendications précédentes, **caractérisé en ce que** les électrodes (107) de la première paire d'électrodes (105-1) et/ou les électrodes (107) de la seconde paire d'électrodes (105-2) comprennent une surface de contact circulaire.

9.  Appareil ménager (100) selon l'une des revendications précédentes, **caractérisé en ce que** le capteur de débit volumique (103) est construit de façon symétrique.

10. Appareil ménager (100) selon l'une des revendications précédentes, **caractérisé en ce que** le capteur de débit volumique (103) comprend un pont de Wheatstone ou un pont de Thomson destiné à détecter une variation de résistance ou de conductivité, qui est relié à la seconde paire d'électrodes (105-2).

11. Procédé pour déterminer un débit volumique d'un fluide dans une conduite (101) d'un appareil ménager (100) selon l'une des revendications précédentes, comprenant les étapes consistant à :

    chauffer le fluide au moyen de la première paire d'électrodes (105-1) dans une paroi de la conduite (101),
    détecter la conductivité du fluide chauffé au moyen de la seconde paire d'électrodes (105-2) dans la paroi de la conduite (101), et
    détecter un débit volumique du fluide sur la base d'un temps entre le chauffage du fluide et la détection d'une conductivité augmentée.

# Fig. 1

# Fig. 2

# Fig. 3

Leitfähigkeit Waschmittel = *f* ( Temperatur )

# Fig. 4

# Fig. 5A

# Fig. 5B

# Fig. 6

# Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19858388 A1
- DE 10063998 A1
- US 3019647 A
- DE 124676 A1
- US 5526696 A
- US 4604904 A
- US 2002092363 A1
- EP 1690971 A2
- DE 102011122921 A1